Europäisches Patentamt

**European Patent Office**

**Office européen des brevets**

(11) Publication number: **0 125 201**

**A2**

## EUROPEAN PATENT APPLICATION

(21) Application number: **84730044.9**

(22) Date of filing: **25.04.84**

(51) Int. Cl.³: **B 60 C 7/10**
**B 29 H 13/00**

(30) Priority: **27.04.83 ZA 830542**

(43) Date of publication of application:
**14.11.84 Bulletin 84/46**

(84) Designated Contracting States:
**AT BE CH DE FR GB IT LI LU NL SE**

(71) Applicant: **Donald MacPherson Group PLC**
**Three Quays Tower Hill**
**London EC3R 6EL(GB)**

(72) Inventor: **Farkas, Paul Victor**
**62 Hume Road**
**Dunkeld Johannesburg(ZA)**

(74) Representative: **Patentanwälte Wenzel & Kalkoff**
**Grubes Allee 26 Postfach 730466**
**D-2000 Hamburg 73(DE)**

(54) **Polyrethane filled tyres.**

(57) The invention provides for a special polyurethane filling for tyres, the filling having desirable heat absorbing and physiomechanical properties and being formed from liquid polyetherdiol and isocyanate starting materials so that the isocyanate index is equal to or greater than 1.

EP 0 125 201 A2

THIS invention relates to polyurethane filled tyres. More particularly the invention is concerned with a special polyurethane filling for tyres.

Filled tyres are well known for use with vehicles of a kind where downtime caused by flats is a greater consideration than comfort of ride. For example farm equipment such as tractors and industrial, mining and military vehicles may usefully employ filled tyres, although their application is not limited to these fields.

In general the filler material for tyres is a suitable grade of non-foamed polyurethane, the constituents of which are selected to give a jelly-like rubbery consistency which is solid throughout substantially the entire chamber defined by the tyre casing and the wheel rim. The resilient filler material may under certain conditions be expandable and has a physical behaviour which simulates pressurized air used in pneumatic tyres and holds the tyre carcass in the required profile.

Thus the prior art, exemplified by South African Patent No. 74/5895, describes the formation of a suitable grade of polyurethane within the tyre chamber utilising certain polyisocyanate prepolymers and specified hydroxyl group terminated polyfunctional reactants to give a void free jelly-like solid. The filler in accordance with this disclosure is stated to possess heat absorbent properties which permits heat dissipation within the filling so that heat transfer to the wheel bearings is minimised and physicomechanical properties of the filled tyre are not diminished during usage.

It is also part of the state of the art, as described in United Kingdom Patent No. 1,534,687, to form tyre filling solid polyurethane from a diphenylmethane diisocyanate, chemically modified to liquid form, and a liquid polyoxypropylene polyether triol where the ratio of functional isocyanate groups to hydroxyl groups (the isocyanate index) is in the range of 0,65 to 0,9. The isocyanate index is important to provide a polyurethane filler which is not too rigid and in which physical degradation of the filler will not occur due to heat build up.

It is an object of the present invention to provide filled tyres utilising a polyurethane composition which has particularly desirable properties as a tyre filler with respect to heat absorbtion capabilities. The polyurethane filler of the invention also has desirable properties in respect of its consistency or elastomer qualities having regard to its use as a tyre filling material.

According to the invention a tyre and wheel rim assembly which defines a chamber between the tyre carcass and the wheel rim is characterised in a resilient solid polyurethane filling material occupying substantially the entire chamber space and such polyurethane comprising a reaction product of a liquid polyether diol and an isocyanate, the proportions of the starting materials being such as to give an isocyanate to hydroxyl group ratio (isocyanate index) equal to or greater than 1.

- 5 -

As cross-linkers a small proportion of a polyether triol or higher hydroxyl group functionality compound may be incorporated.

It has been found that by utilising a diol starting material instead of one having three functional hydroxyl groups, and by employing a relatively high isocyanate index, particularly desirable heat absorbtion properties are imparted to the tyre filling material. Preferably the polyether diol starting material has a molecular weight of 4000 or more. Preferably also the isocyanate reactant is diphenylmethane diisocyanate which has been modified to liquid form in known manner and blended with toluelene diisocyanate or with any other suitable reactive or non-reactive component.

Also according to the invention the isocyanate index in the staring materials is at least 1,04. The reaction is carried out in accordance with so-called "one shot" polymerization technology by introducing the starting materials into the tyre carcass duly mounted on a wheel rim so that air in the tyre chamber is replaced by the polyurethane forming materials.

Although the invention is not to be regarded as dependant upon any theory as to the mode of operation of the polyurethane filling, it is believed that through use of the diol starting material and a high isocyanate index which is equal to or greater than 1, allophanate formation by secondary reactions of the urethane groups with isocyanate groups occurs. The macro-molecular polyurethane molecules tend to laminate and the laminates incorporate intermittent microcrystalites which, together with the allophanate formation ensures low hysteresis energy losses. The allophanate bonds and microcrystalites are destroyed by intake of heat energy by the polyurethane filling and in this way a lowering of the internal energy content of the system is achieved. By dissipation of heat energy through conduction, the allophanate bonds and microcrystalites are reformed.

Further according to the invention a controlled degree of cross-linking is imparted to the polyurethane reaction product by incorporation of a desired proportion of a cross-linking agent. An example of a suitable cross-linking agent is an organotitanate which may be employed in the nature of a catalyst as well. Other cross-linking effects can be obtained by using an amine extended polyol or a polyamine hydroxyl terminated material.

By employing an isocyanate to hydroxyl group index of about 1,05 and a cross-linking agent as a catalyst, a solid polyurethane with satisfactory elastomeric resiliency, mechanical strength and good heat absorbing properties is obtained.

The invention is illustrated by the following examples:

## Example 1

Starting components for reaction together to form substantially void free resilient polyurethane elastomer were prepared in two parts. A first part "A" was formed from a blend comprising:

| Trade Name | Nature | Parts by weight |
|---|---|---|
| 1. Voranol EP-1900 (Dow Chemical) | (a 4000 mol.wt. polyether diol being the principal polyol reactant). | 100 |
| 2. Tegostab B4113 (TH Goldschmidt) | (an organo siloxane additive) | 0,4 |
| 3. Poly-X-L-70 | (an inactive extender) | 30,13 |
| 4. Daltolac P140 (I.C.I.) | (high functionality polyol) | 3,0 |
| 5. 1,4-Butandiol | (Low mol.wt.diol extender) | 0,6 |
| 6. Acetyl-Acetone | (additive) | 0,0952 |
| 7. -p-dimethoxy benzene | (additive) | 0,0794 |
| 8. Thorcat 535 (Thor Chemical) | (Phenyl-mercuric-propionate-co-catalyst) | 0.14 |
| 9. KR-44-U (Kenrich Petroleum) | (organo-Titanate - co-catalyst - cross-linker) | 0.6 |

The second part "B" was formed from a blend comprising modified pure diphenylmethane diisocyanate and toluelene diisocyanate as follows:

| | | |
|---|---|---|
| 1. Isonate -143L (Upjohn) | 4,4'methylene diphenyl diisocyanate | 7,04 |

and

| | | |
|---|---|---|
| 2. TDI 80/20 | An 80 to 20 blend of -o- and -p- toluelene diisocyanate | 4,21 |

Parts A and B were injected together by known means into a tyre carcass mounted upon a wheel, the parts being injected in the ratio of 12 parts of A to 1 part of B in order to obtain an isocyanate index of 1,046.

The components A and B filled the tyre chamber and reacted together to give a solid polyurethane elastomer of high tear resistance and desired low resilience simulating that of pressurized air in the tyre so that the latter conformed to a required profile.

The gel time of the components A and B in the tyre chamber was approximately 1 hour and the polyurethane filler formed had a hardness equal to or less than 20 shore A and a rebound resiliency of 45 to 48.

In addition the polyurethane possessed excellent heat absorbtion qualities with low hysteresis loss based upon the reversible physical reactions discussed above.

- 10 -
## Example 2

PART A :

| Component | Supplier | Amount(pbw) | Description |
|---|---|---|---|
| Voranol EP-1900 | Dow | 85 | 4000 MW polyether diol |
| Castor Oil | Diverse | 10 | OH number 165 cross-linker |
| 1,4-Butandiol | Diverse | 5 | diol extender |
| Daltolac P 140 | I.C.I. | 1 | high functionality polyol |
| Thorcat 535 | Thor | 0,14 | Co-catalyst & cross-linker |
| Acetyl-Acetone | Diverse | 0,0952 | Additive |
| P-dimethoxy-benzene | Diverse | 0,0794 | Additive |
| KR-44-U | Kenrich Petroleum | 1.8 | Co-catalyst |
| Stabaxol I | Bayer | 1 | Additive |
| Water | | 0.25 | Additive |

PART B :

| | | | |
|---|---|---|---|
| Isonate 143L | Upjohn | 31.28 | isocyanate |
| Califlux L 79 P | Witco | 73.08 | extender |

Parts A and B were injected together by known means into a tyre carcass mounted upon a wheel, the parts being injected in the ratio of 1 part of A to 1 part of B in order to obtain an isocyanate index of approximately 1,05.

The components A and B filled the tyre chamber and reacted together to give a solid polyurethane elastomer of high tear resistance and desired low resilience simulating that of pressurized air in the tyre so that the latter conformed to a required profile.

The gel time of the components A and B in the tyre chamber was approximately 1 hour and the polyurethane filler formed had a hardness equal to or less than 20 shore A and a rebound resiliency of 42 to 46.

In addition the polyurethane possessed excellent heat absorbtion qualities with low hysteresis loss based upon the reversible physical reactions discussed above.

The invention also includes within its scope a two component chemical system, the components being the aforementioned liquid polyether diol and isocyanate starting materials, for use in the production of a polyurethane elastomer material effective as a tyre filling.

The separate polyether diol and isoycanate starting materials are prefeably blended with extenders, cross-linking agents, catalysts and modifiers to provide compositions A and B as described in the above examples and which are separately stored in containers from which they may be drawn for blending to form polyurethane filled tyres.

claims

1.  A tyre and wheel rim assembly which defines a chamber between the tyre carcass and the wheel rim, characterised in a resilient solid polyurethane filling material occupying substantially the entire chamber space and such polyurethane comprising a reaction product of a liquid polyether diol and an isocyanate, the proportions of the starting materials being such as to give an isocyanate to hydroxyl group ratio (isocyanate index) equal to or greater than 1.

2.  The tyre and wheel rim assembly of claim 1 in which the polyether diol starting material has a molecular weight of 4000 or more.

3.  The tyre and wheel rim assembly of claim 1 or claim 2 in which the isocyanate reactant is diphenylmethane diisocyanate which has been modified to liquid form and blended with toluelene diisocyanate.

4.    The tyre and wheel rim assembly of claim 1 or claim 2 in which the isocyanate reactant is diphenylmethane diisocyanate which has been modified to liquid form and blended with a chemically inactive extender.

5.    The tyre and wheel rim assembly of any one of claims 1 to 4 in which the isocyanate index in the starting materials is at least 1,04.

6.    The tyre and wheel rim assembly of anyone of the above claims in which a controlled degree of cross-linking is imparted to the polyurethane reaction product by incorporation of a desired proportion of a cross-linking agent.

7.    The tyre and wheel rim assembly of claim 6 in which the cross-linking agent is one or more compounds selected from a group comprising organotitanates, polyether polyols, amine extended polyols and hydroxyl terminated polyamines.

8. The tyre and wheel rim assembly of claim 7 in which the cross-linking agent includes an organotitanate.

9. A tyre and wheel rim assembly substantially as herein described with reference to example 1 or 2.

10. A two component chemical system for use in the production of a polyurethane elastomer material effective as a tyre filling, the said components comprising two separate starting materials one of which includes a liquid polyether diol and the other a liquid isocyanate material.

11. The system of claim 10 in which the polyether diol starting material has a molecular weight of 4000 or more.

12. The system of claim 10 or claim 11 in which the isocyanate reactant is diphenylmethane diisocyanate which has been modified to liquid form and blended with toluelene diisocyanate.

13. The system of claim 10 or claim 11 in which the isocyanate reactant is diphenylmethane diisocyanate which has been modifed to liquid form and blended with a chemically inactive extender.

14. The system of any one of claims 10 to 13 in which the polyether diol starting material is contained in a blend including at least one additive selected from cross-linking agents, catalysts and extenders.

15. A two component chemical system for use in the production of a polyurethane elastomer material effective as a tyre filling, the said components comprising blends A and B substantially as described with reference to example 1 or 2.